# EUROPÄISCHE PATENTSCHRIFT

(11) **EP 0 533 041 B1**
(45) Veröffentlichungstag und Bekanntmachung des Hinweises auf die Patenterteilung: **07.06.1995**
(21) Anmeldenummer: 92115393.8
(22) Anmeldetag: 09.09.1992
(51) Int. Cl.: A01B 59/041

(54) **Führungsvorrichtung für Unterlänker und landwirtschaftliches Fahrzeug**
Guiding device for the lower arms and agricultural vehicle
Dispositif de guidage des bras d'attelage et véhicule agricole

(30) Priorität: 19.09.1991 US 762198
(43) Veröffentlichungstag der Anmeldung: 24.03.1993
(73) Patentinhaber: DEERE & COMPANY, Moline, Illinois 61265 (US)
(72) Erfinder: Mayfield, Robert Lynn, Cedar Falls, Iowa (US)
(74) Vertreter: Feldmann, Bernhard

(56) Entgegenhaltungen:
- EP-A- 0 315 594
- DE-A- 3 113 915
- GB-A- 1 354 039
- US-A- 4 116 458
- US-A- 4 790 557

## Beschreibung

Die Erfindung betrifft eine Führungsvorrichtung zur seitlichen Lageeinstellung der beiden an einem landwirtschaftlichen Fahrzeug angelenkten Unterlenker, an welche Anbauvorrichtungen befestigbar sind, mit zwei seitlichen Anschlägen, welche geeignet sind, jeweils an einem der Unterlenker anzugreifen, sowie ein landwirtschaftliches Fahrzeug mit einer derartigen Führungsvorrichtung.

Durch die EP-A-0 315 594 ist eine Einrichtung zur Einstellung des Ausmaßes der seitlichen Verschwenkbarkeit von zwei an einem landwirtschaftlichen Schlepper angelenkten Hubarmen bekannt geworden welche alle Merkmale des Oberbegrifs der Anspruchs 1 zeigt. Die Hubarme sind mit ihren vorderen Enden durch Kugelgelenke an der Schlepperstruktur beweglich befestigt, so daß sie seitlich auslenken können, um bei an die Hubarme befestigtem Anbaugerat eine Anpassung an auftretende Bodenunebenheiten zu ermöglichen. Zur Einstellung des möglichen seitlichen Verschwenkweges sind zwischen den Hubarmen zwei zueinander beabstandete Anschläge angeordnet, deren Abstand sich durch eine mechanische Verstellvorrichtung einstellen läßt. Die bekannte Einrichtung eignet sich nicht für eine seitliche Lageausrichtung eines an den Schlepper angebauten Arbeitsgerätes, wie sie beispielsweise beim Pflanzen erforderlich sein kann.

Es sind unterschiedliche Führungsvorrichtungen im Handel, durch die sich ein Anbaugerät oder eine Anbauvorrichtung relativ zum schleppenden Fahrzeug seitlich verschieben läßt, um das Arbeitsgerät beim Pflanzen oder bei der Bodenbearbeitung genau auf die gewünschte Reihe ausrichten zu können. Hierdurch soll eine Beschädigung von Pflanzen vermieden, der Ermüdung des Fahrers vorgebeugt, ein schnellerer Schlepperbetrieb und eine engere, genauere Bestellung ermöglicht werden. Viele der bekannten Führungsvorrichtungen oder Reihenlenkautomaten behindern jedoch die Anwendung von Schnellkupplern für die Anhängevorrichtung. Ferner wird der Anlenkpunkt der Anbaugeräte häufig weiter zurück verlegt. Sofern keine geführten Anbaugeräte an die Anbauvorrichtung angeschlossen sind, müssen die Führungsvorrichtungen zumeist entfernt werden. Einige dieser Führungseinrichtungen erfordern die Verwendung eines teuren Spezialschnellkupplers, der am Ende der Anbauvorrichtung zu befestigen ist. Hierdurch wird ein beträchtliches Zusatzgewicht hinter dem Schlepper hinzugefügt, wodurch einerseits die Schlepperstabilität herabgesetzt und andererseits die Ausnutzung der vollen Hubhöhe der Anbauvorrichtung verhindert werden. Viele der bekannten Führungsvorrichtungen stören den richtigen Betrieb von Zapfwelle, Anbauvorrichtung oder Zugpendel.

Die der Erfindung zugrunde liegende Aufgabe wird darin gesehen, eine Führungsvorrichtung der eingangs genannten Art anzugeben, die einfach im Aufbau ist, nicht die Benutzung vorhandener Schnellkuppler der Anhängevorrichtung oder anderer Einrichtungen, wie Zapfwelle oder Zugpendel stört, die ferner nicht von dem Fahrzeug demontiert werden muß, sofern kein Anbaugerät angeschlossen ist, und die keinen teuren Spezialschnellkuppler erfordert. Hinter dem Schlepper soll kein wesentliches zusätzliches Gewicht wirksam sein, welches die Schlepperstabilität herabsetzt und die volle Ausnutzung der Hubhöhe verhindert. Die Führungsvorrichtung soll eine genaue Ausrichtung der Anbauvorrichtung zu einem Anbaugerät ermöglichen, um den Anbauvorgang zu erleichtern. Sie soll ferner die Anwendung einer einfachen Steuereinrichtung ermöglichen, durch die sich wahlweise die Lage der Anbauvorrichtung festlegen läßt oder ein freies seitliches Ausschwingen ermöglicht wird.

Die Aufgabe wird ausgehend von dem Oberbegriff des Patentanspruches 1 durch dessen kennzeichnende Merkmale gelöst.

Weitere vorteilhafte Ausgestaltungen und Weiterbildungen der Erfindung gehen aus den Unteransprüchen hervor.

Die erfindungsgemäße Führungsvorrichtung ist bei einer üblichen Anbauvorrichtung eines landwirtschaftlichen Schleppers anwendbar, welche zwei seitlich auslenkbare Unterlenker aufweist, an die Anbaugeräte ankoppelbar sind. Vorzugsweise enthält die Führungsvorrichtung zwei Schwenklagerstellen, die am hinteren Ende eines Zapfwellengehäuses oberhalb und beidseits der Zapfwelle befestigt sind. Von den beiden Schwenklagerstellen hängt je ein Arm herab, der drehbeweglich mit einem rechten bzw. linken Anschlaghalter verbunden ist. Die beiden Anschlaghalter sind durch eine Platte und einen in seiner Länge einstellbaren Querstab fest miteinander verbunden. Die Anschlaghalter sind mit den zugehörigen Anschlägen für die Begrenzung der seitlichen Bewegung der Unterlenker fest verbunden, wobei diese Verbindung jedoch einstellbar ist. Ein doppelt wirkender Hydraulikzylinder ist mit seinem Zylindergehäuseende über eine feste Schwenkachse mit dem Zapfwellengehäuse verbunden. Die Kolbenstange ist gelenkig mit einem der Anschlaghalter verbunden. Durch Ausfahren oder Einfahren der Kolbenstange wird die feste Einheit, bestehend aus den Anschlaghaltern, den Anschlägen, der Platte und dem Querstab hinsichtlich der Fahrzeugausrichtung nach links oder rechts bewegt. Die Anschläge verschieben dabei ihrerseits die Unterlenker nach links oder rechts, wodurch das an den Unterlenkern befestigte Anbaugerät seitlich geführt wird.

Die erfindungsgemäße Führungsvorrichtung hat einen einfachen Aufbau. Sie ist unmittelbar am hinteren Ende des Fahrzeuges montierbar und benötigt einen vergleichsweise geringen Bauraum. Sie läßt sich so ausbilden, daß sie die Benutzung vorhandener Schnellkuppler der Anhängevorrichtung oder anderer Einrichtungen, wie Zapfwelle oder Zugpendel nicht behindert. Sie kann ständig am Fahrzeug verbleiben und braucht nicht demontiert zu werden, wenn ein Betrieb ohne Anbaugerät erfolgt. Teure Spezialschnellkuppler sind nicht erforderlich. Durch die Anordnung unmittelbar hinter dem Schlepperrumpf wirkt sich das Gewicht der Führungsvorrichtung nicht nachteilig auf die Fahrzeugstabilität und die Hubhöhe der Anbauvorrichtung aus. Die Führungsvorrichtung ermöglicht eine genaue Ausrichtung der Anbauvorrichtung zu einem Anbaugerät, so daß der Anbauvorgang schnell und einfach erfolgen kann. Die Führungsvorrichtung ermöglicht ferner die Anwendung einer einfachen Steuereinrichtung, durch die sich wahlweise die seitliche Lage der Anbauvorrichtung festlegen läßt, oder ein freies seitliches Ausschwingen zugelassen wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht einer erfindungsgemäßen Betätigungsvorrichtung für das Führungssystem einer Anbauvorrichtung,
- Fig. 2: die Explosionsdarstellung einer erfindungsgemäßen Betätigungsvorrichtung und
- Fig. 3: die Querschnittsansicht von hinten längs der Schnittlinie 3 - 3 in Fig. 1.

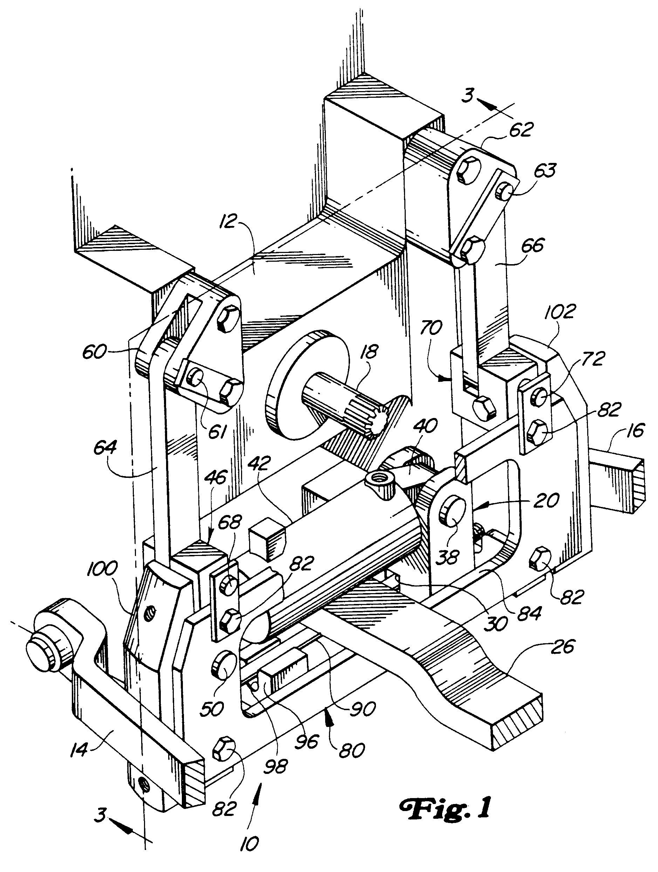

Wie es am besten aus Fig. 1 hervorgeht, ist die Betätigungsvorrichtung 10 für das Führungssystem einer Anbauvorrichtung an dem Zapfwellengehäuse 12 befestigt, welches sich seinerseits im hinteren Bereich eines nicht näher dargestellten Schleppers oberhalb und zwischen den Unterlenkern 14, 16 einer konventionellen nicht näher dargestellten Dreipunktanbauvorrichtung befindet. Eine übliche Zapfwelle 18 ragt aus dem Zapfwellengehäuse 12 nach hinten heraus.

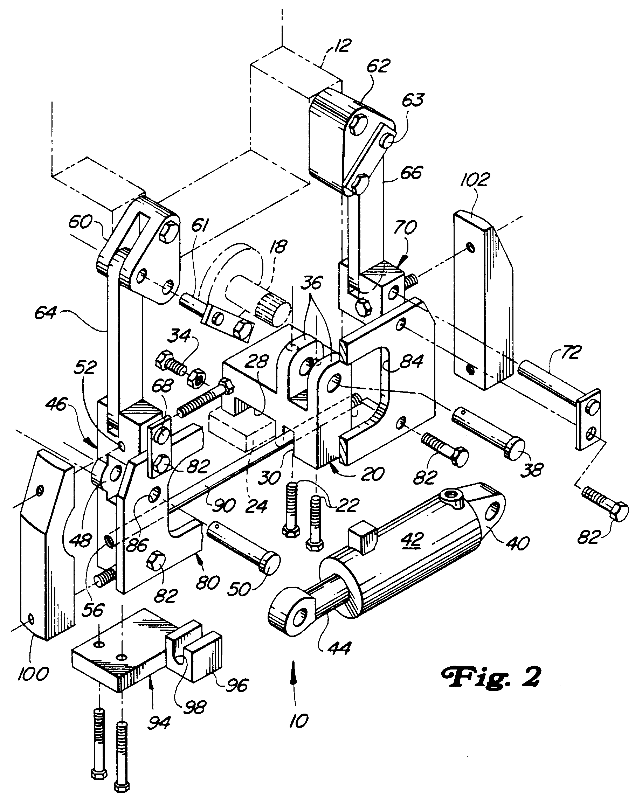

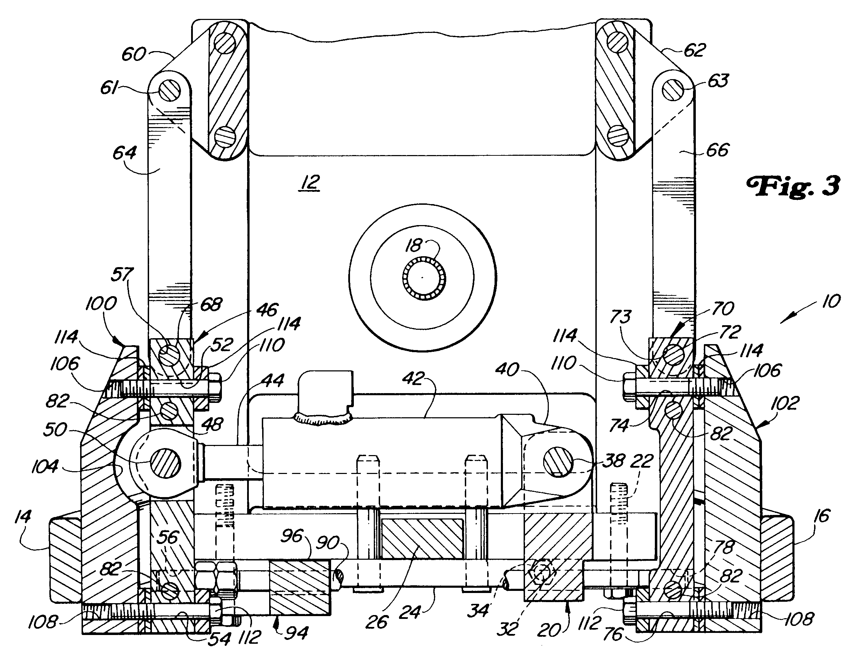

Die Betätigungsvorrichtung 10 enthält eine Konsole 20, die mittels Schrauben 22 an dem Gehäuse 12, vorzugsweise zwischen dem Zapfwellengehäuse 12 und einer üblichen Zugpendelhalterung 24, die ein Zugpendel 26 trägt, festgeschraubt ist. Wie aus Fig. 2 und 3 ersichtlich, weist die Konsole 20 eine breite, nach unten offene, quer zur Fahrzeugausrichtung ausgerichtete Ausnehmung 28 mit U-Profil und einen schmalen, nach unten offenen, quer ausgerichteten Schlitz 30 auf. Die Ausnehmung 28 nimmt die Zugpendelhalterung 24 auf. In der Konsole 20 befindet sich eine Gewindebohrung 32, die in der Ausnehmung 28 mündet. In die Gewindebohrung 32 ist eine Schraube, insbesondere eine Sechskantschraube 34 eingedreht, durch die die Konsole 20 auf der Zugpendelhalterung 24 festklemmbar ist. Die Konsole 20 enthält ferner ein Paar nach oben ausgerichteter Konsolenarme 36, welche einen Lagerzapfen 38 aufnehmen, der seinerseits der gelenkigen Verbindung zwischen der Konsole 20 und dem Gehäuseende 40 eines zweiseitig wirkenden Hydraulikzylinders 42 dient.

Aus dem Kolbenende des Hydraulikzylinders 42 ragt eine Kolbenstange 44 heraus, die gelenkig mit einem linken Anschlaghalter 46 in Verbindung steht. Der linke Anschlaghalter 46 enthält eine mittige Ausnehmung 48, die der verschwenkbaren Aufnahme eines Anschlußteils der Kolbenstange 44 mittels eines Lagerzapfens 50 dient, eine obere und eine untere quer ausgerichtete Bohrung 52, 54, eine quer ausgerichtete Gewindebohrung 56, die unter der Ausnehmung 48 liegt und eine Lagerzapfenbohrung 57. An dem Gehäuse 12 sind oberhalb und beidseits der Zapfwelle 18 eine linke und eine rechte Schwenklagerkonsole 60, 62 befestigt. An diesen sind durch Bolzen 61, 63 ein linker und ein rechter Schwenkarm 64, 66 gelenkig befestigt, die im wesentlichen nach unten hängen. Der linke Schwenkarm 64 ist über einen Bolzen 68, der von der Lagerzapfenbohrung 57 aufgenommen wird, gelenkig an dem oberen Bereich des linken Anschlaghalters 46 befestigt.

Der rechte Schwenkarm 66 steht über einen Bolzen 72, der durch eine Bohrung 73 aufgenommen wird, schwenkbar mit dem oberen Ende des rechten Anschlaghalters 70 in Verbindung. Der rechte Anschlaghalter 70 enthält eine obere und eine untere quer ausgerichtete Bohrung 74, 76 sowie eine quer ausgerichtete Gewindebohrung 78, die sich etwas oberhalb der unteren Bohrung 76 befindet.

Wie den Fig. 1 und 2 zu entnehmen ist, ist an den hinteren Seiten des linken und rechten Anschlaghalters 46, 70 eine im wesentlichen rechteckige Platte 80 vorzugsweise durch vier Schrauben 82, die in entsprechende Gewindebohrungen der Anschlaghalter eingedreht sind, befestigt. Die Platte 80 weist in ihrer Mitte eine Öffnung 84 auf, durch welche das Zugpendel 26 nach hinten herausragt. Die Platte 80 hat ferner eine Bohrung 86 zur Aufnahme des Bolzens 50. Die Platte 80 hält die Anschlaghalter 46, 70 auf einen festen Abstand und in paralleler Ausrichtung zueinander. Ein einstellbarer Querstab 90 verbindet den linken Anschlaghalter 46 mit dem rechten Abstandshalter 70 mittels Gewindeenden, die in die Gewindebohrungen 56 und 78 eingeschraubt sind.

Wie ferner den Fig. 1 und 2 zu entnehmen ist, tragen die Enden der Bolzen 68 und 72 kleine gelochte Platten, die jeweils der Aufnahme einer der Schrauben 82 dienen, wodurch die Bolzen 68 und 72 in ihrer Lage gehalten werden. Die Bolzen 61 und 63 enthalten ähnliche gelochte, an den Schwenklagerkonsolen 60, 62 festschraubbare Platten.

Ein Führungsglied 94 ist an dem Boden des Gehäuses 12 nahe des linken Anschlaghalters 46 festgeschraubt. Das Führungsglied 94 trägt ein Führungsteil 96, welches einen nach oben offenen, quer ausgerichteten Schlitz 98 aufweist. Die Schlitze 98 und 30 nehmen den verschiebbaren Querstab 90 in sich auf und verhindern durch ihre Seitenwände eine Bewegung des unteren Teils der Betätigungsvorrichtung 10 in Längsrichtung des Fahrzeuges.

Ein linker Anschlag 100 für die Begrenzung der seitlichen Bewegung des linken Unterlenkers 14 befindet sich zwischen dem linken Anschlaghalter 46 und dem linken Unterlenker 14, und ein rechter Anschlag 102 für die Begrenzung der seitlichen Bewegung des rechten Unterlenkers 16 befindet sich zwischen dem rechten Anschlaghalter 70 und dem rechten Unterlenker 16. Der linke Anschlag 100 enthält eine abgerundete Ausnehmung 104, die auf das abgerundete Ende der Kolbenstange 44 angepaßt ist. Jeder der Anschläge 100, 102 hat eine obere und eine untere quer ausgerichtete Gewindebohrung 106, 108. Jeder der Anschläge 100, 102 ist durch eine obere und eine untere Schraube 110, 112 an dem entsprechenden Anschlaghalter 46, 70 befestigt. Die oberen Schrauben 110 erstrecken sich durch die Bohrungen 52 bzw. 74 und sind in die oberen Gewindebohrungen 106 eingeschraubt. Die unteren Schrauben 112 erstrecken sich durch die Bohrungen 56 bzw. 78 und sind in die unteren Gewindebohrungen 108 eingeschraubt. Wie aus Fig. 3 ersichtlich, sind die Schäfte der Schrauben 110, 112 länger als die Summe der Bohrungslängen der Bohrung 52 bzw. 74 und der Gewindebohrung 106. Die Schrauben 110, 112 können je mehrere Beileg- oder Abstandsscheiben 114 aufnehmen, die zwischen jedem Anschlaghalter 46, 70 und dem zugehörigen Anschlag 100, 102 und/oder zwischen dem Anschlaghalter 46, 70 und dem Kopf der jeweiligen Schraube 110, 112 angeordnet sind. Durch Vertauschen der Beilegscheiben 114 und Anziehen der Schrauben 110, 112 können die Anschläge 100, 102 auf unterschiedliche seitliche Abstände zueinander festgelegt werden. Hierdurch läßt sich der seitliche Abstand zwischen den Unterlenkern 14, 16 einstellen, um diesen auf Anbaugeräte mit unterschiedlichen Abmessungen anzupassen und um Abnützungen der Anschlaghalter 70 auszugleichen.

Während des Zusammenbaus wird die Länge des Querstabes 90 so lange verkürzt, bis die aus beiden Anschlaghaltern 46, 70, den beiden Anschlägen 100, 102 und der Platte 80 bestehende Anordnung eine feste Einheit bildet. Wie aus Fig. 1 hervorgeht, befindet sich diese feste Einheit unmittelbar am hinteren Ende des Gehäuses oder Rahmens 12 und im allgemeinen zwischen den Unterlenkern 14, 16. Sie befindet sich vor den nicht dargestellten hinteren Enden der Unterlenker 14, 16. Diese feste Einheit hat ferner in ihrer Mitte eine Öffnung, aus der das Zugpendel herausragt. Dies erlaubt es, daß die Betätigungsvorrichtung 10 an einem Schlepper mit einer konventionellen Dreipunktaufhängung montierbar ist, ohne daß eine teure und schwere Spezialschnellkupplung am hinteren Ende der Unterlenker befestigt werden muß.

Während des Betriebs wird unter Druck stehende Hydraulikflüssigkeit in den Hydraulikzylinder 42 gedrückt, wodurch sich die Kolbenstange 44 ausfahren oder einziehen läßt. Hierdurch wird die genannte feste Einheit nach links oder rechts verschwenkt, wobei die Schwenkarme 64, 66 um die Bolzen 61 und 63 verdreht werden. Die Anschläge 100, 102 greifen ihrerseits an dem linken Unterlenker 14 oder dem rechten Unterlenker 16 an und bewegen die Unterlenker 14, 16 nach links oder rechts. Die Betätigungsvorrichtung 10 kann in Verbindung mit unterschiedlichen kommerziell verfügbaren Reihenlenkautomaten, wie beispielsweise das von der Fa. Sukup Manufacturing Company, Shefield, Iowa, USA hergestellte "Auto Guide Row Crop Sensing System" oder das von der Fa. HR Manufacturing Company hergestellte "Navigator Row Crop Sensing System" oder das von der Fa. Orthman Manufacturing, Inc., Lexington, Nebraska, USA hergestellte "MP-III Automatic Guidance System" oder andere ähnliche Systeme verwendet werden.

Unter Zuhilfenahme eines geeigneten Ventils läßt sich die Betätigungsvorrichtung 10 so betreiben, daß die Anbauvorrichtung von einer Seite zur anderen Seite verstellbar ist. Dabei läßt sich die Anbauvorrichtung relativ zu einem Anbaugerät genau ausrichten, was den Anbauvorgang beim Ankuppeln des Anbaugerätes an die Anbauvorrichtung erleichtert. Das Ventil kann auch als einfache Steuereinrichtung für die seitliche Bewegung der Unterlenker dienen, wobei die Bedienungsperson die Anbauvorrichtung entweder in einer festen Lage arretieren oder ein freies seitliches Ausschwingen zulassen kann.

Auch wenn die Erfindung lediglich anhand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen. Beispielsweise kann der eine einzige Kolbenstange enthaltende Hydraulikzylinder durch einen Hydraulikzylinder mit zwei Kolbenstangen ersetzt werden, dessen Zylindergehäuse am Schleppergehäuse befestigt ist und dessen beide Kolbenstangen mit je einem der Anschlaghalter verbunden sind.

## Patentansprüche

1. Führungsvorrichtung zur seitlichen Lageeinstellung der beiden an einem landwirtschaftlichen Fahrzeug angelenkten Unterlenker (14, 16), an die Anbauvorrichtungen befestigbar sind, mit zwei seitlichen Anschlägen (100, 102), welche geeignet sind, jeweils an einem der Unterlenker (14, 16) anzugreifen, dadurch gekennzeichnet,
- daß die beiden Anschläge (100, 102) mit Verbindungsmitteln zu einer festen, insgesamt beweglichen Führungseinheit miteinander verbindbar sind,
- daß Haltemittel zur Befestigung der Führungseinheit am hinteren Ende des landwirtschaftlichen Fahrzeuges vorgesehen sind, gegenüber welchen eine seitliche Bewegung der Führungseinheit möglich ist, und
- daß wenigstens ein Betätigungsorgan vorgesehen ist, das zwischen Haltemittel und Führungseinheit angeordnet ist und der seitlichen Bewegung der Führungseinheit dient.

2. Führungsvorrichtung nach Anspruch 1, dadurch gekennzeichnet, daß die Führungseinheit eine Ausnehmung (84) aufweist, die derart ausgebildet ist, daß sich ein nach hinten ausgerichtetes Zugpendel (26) des Fahrzeuges durch die Ausnehmung (84) erstrecken kann.

3. Führungsvorrichtung nach Anspruch 1 oder 2, dadurch gekennzeichnet, daß die Haltemittel eine erste und eine zweite mit dem landwirtschaftlichen Fahrzeug fest verbindbare und hinsichtlich der Fahrzeugausrichtung quer zueinander beabstandete Konsole (60, 62) sowie zwei Schwenkarme (64, 66) enthalten, deren jeweils erste Enden gelenkig mit einer der Konsolen (60, 62) verbunden sind und deren jeweils zweite Enden gelenkig an der Führungseinheit angreifen, wobei die Gelenkachsen der ersten Enden der Schwenkarme (64, 66) hinsichtlich der Fahrzeugausrichtung in Fahrtrichtung ausgerichtet sind.

4. Führungsvorrichtung nach einem der Ansprüche 1 bis 3, dadurch gekennzeichnet, daß die Führungseinheit einen linken Anschlaghalter (46), einen rechten Anschlaghalter (70), eine Platte (80), deren seitliche Enden mit den Anschlaghaltern (46, 70) verbunden sind und diese auf Abstand zueinander hält, und Verbindungsmittel (110, 112, 114) aufweist, durch die sich jeder Anschlaghalter (46, 70) mit dem zugehörigen Anschlag (100, 102) bei einem einstellbaren gegenseitigen Abstand verbinden läßt.

5. Führungsvorrichtung nach einem der Ansprüche 1 bis 4, dadurch gekennzeichnet, daß das Betätigungsorgan einen zweiseitig betätigbaren Hydraulikzylinder (42) mit wenigstens einer herausragenden Kolbenstange (44) enthält, und daß das Zylindergehäuse einerseits und die wenigstens eine Kolbenstange (44) andererseits an dem landwirtschaftlichen Fahrzeug anlenkbar ist bzw. an der Führungseinheit, insbesondere an einem Anschlaghalter (46) angreift.

6. Führungsvorrichtung nach Anspruch 4 oder 5 dadurch gekennzeichnet, daß die Führungseinheit einen in seiner Länge einstellbaren Querstab (90) enthält, dessen Gewindeenden in Gewindebohrungen der sich gegenüberliegenden Anschlaghalter (46, 70) einschraubbar sind, und daß wenigstens ein an dem landwirtschaftlichen Fahrzeug befestigbares Führungsmittel (94, 96) vorgesehen ist, welches einen Schlitz (98) aufweist, in dem der Querstab (90) gleitbar geführt ist, wobei die Seitenwände des Schlitzes (98) eine Bewegung des Querstabes (98) und der Führungseinheit hinsichtlich der Fahrzeugausrichtung in Fahrtrichtung verhindern.

7. Führungsvorrichtung nach einem der Ansprüche 4 bis 6, dadurch gekennzeichnet, daß jeder Anschlag (100, 102) für ein unmittelbar an einem zugehörigen Unterlenker (14, 16) gleitendes Angreifen ausgelegt ist und jeder Anschlaghalter (46, 70) gelenkig mit dem zweiten Ende eines zugehörigen Schwenkarms (64, 66) verbunden ist.

8. Landwirtschaftliches Fahrzeug mit einer Führungsvorrichtung nach einem der Ansprüche 1 bis 7, deren Führungseinheit zwischen den Unterlenkern (14, 16) und unmittelbar am hinteren Ende des Fahrzeugen angeordnet ist.

9. Landwirtschaftliches Fahrzeug mit einer Führungsvorrichtung nach einem der Ansprüche 1 bis 8, dadurch gekennzeichnet, daß am Fahrzeugaufbau eine sich quer zur Fahrzeugausrichtung erstreckende Zugpendelhalterung (24) befestigt ist, die eine quer verschiebbare und festlegbare Konsole (20) trägt, an welcher das Betätigungsorgan angreift.

10. Landwirtschaftliches Fahrzeug mit einer Führungsvorrichtung nach einem der Ansprüche 3 bis 9, dadurch gekennzeichnet, daß die Konsolen (60, 62) an einem am hinteren Fahrzeugende befestigten Zapfwellengehäuse (12) oberhalb und beidseits der nach hinten aus dem Zapfwellengehäuse (12) herausragenden Zapfwelle (18) befestigt sind.

## Claims

1. A hitch guidance mechanism for draft links (14, 16) coupled pivotally to an agricultural vehicle, to which implements may be attached, having two lateral blocks (100, 102), each for engaging one of the draft links (14, 16), characterised in that
- said two blocks (100, 102) may be connected to one another by connecting elements to a fixed guidance unit with overall mobility;
- that holding elements are provided to attach the guidance unit to the rear end of the agricultural vehicle, a lateral movement of the guidance unit being possible in relation to said holding elements;
- that at least one operating member is provided, which is disposed between the holding element and the guide unit to enable lateral movement of the guidance unit.

2. Guidance mechanism according to Claim 1, characterised in that the guidance unit has a recess (84), the structure of which is such that a drawbar (26) of the vehicle extending to the rear can extend through said recess (84).

3. Guidance mechanism according to Claim 1 or 2, characterised in that the holding elements has a first and a second bracket (60, 62), which may be fixed to the agricultural vehicle and spaced obliquely apart from one another in relation to the vehicle alignment, as well as two pivot arms (64, 66), the first ends of each of which are coupled pivotally to one of the brackets (60, 62) and the second ends of each of which pivotally engage on the guidance unit, the pivot axes of the first ends of the pivot arms (64, 66) extending in the direction of travel in relation to the vehicle alignment.

4. Guidance mechanism according to one of Claims 1 to 3, characterised in that the guidance unit has a left block support (46), a right block support (70), a plate (80), the lateral ends of which are connected to block supports (46, 70) and which holds these at a distance from one another, and connecting elements (110, 112, 114) for connecting each block support (46, 70) to the corresponding block (100, 102) with adjustable spacing between them.

5. Guidance mechanism according to one of Claims 1 to 4, characterised in that the operating member has a double acting hydraulic cylinder (42) with at least one protruding piston rod (44); and that the cylinder housing may be pivoted on one side and the at least one piston rod (44) may be pivoted on the other side of the agricultural vehicle, or engages on the guidance unit, in particular on a block support (46).

6. Guidance mechanism according to Claim 4 or 5, characterised in that the guidance unit has a transverse rod (90), which may be adjusted in length and its threaded ends may be screwed into threaded holes in the opposite block support (46, 70); and that at least one guide member (94, 96), which may be fastened to the agricultural vehicle, is provided, which has a slot (98), in which the transverse rod (90) may slide, the side walls of said slot (98) preventing the transverse rod (90) and the guidance unit from moving in the direction of travel in relation to the vehicle alignment.

7. Guidance mechanism according to one of Claims 4 to 6, characterised in that each block (100, 102) is designed for sliding engagement directly on a corresponding draft links (14, 16), and each block support (46, 70) is pivotally coupled to the second end of a corresponding pivot arm (64, 66).

8. Agricultural vehicle with a guidance mechanism according to one of Claims 1 to 7, in which the guidance unit is disposed between the draft links (14, 16) and directly on the rear end of the vehicle.

9. Agricultural vehicle with a guidance mechanism according to one of Claims 1 to 8, characterised in that on the vehicle structure a drawbar support (24) is coupled, which extends obliquely to the vehicle alignment and carries a bracket (20), which may be obliquely shifted and fixed and on which the operating member engages.

10. Agricultural vehicle with a guidance mechanism according to one of Claims 3 to 9, characterised in that the brackets (60, 62) are secured to a power-take-off housing (12) attached to the rear end of the vehicle above and on both sides of the power-take-off shaft 18 protruding to the rear out of the power-take-off housing (12).

## Revendications

1. Dispositif de guidage pour le réglage latéral de la position des deux bras oscillants inférieurs (14, 16) montés à articulation sur un véhicule agricole et sur lequel peuvent être fixés des dispositifs d'attelage, et comportant deux butées latérales (100, 102) qui sont chacune destinées à venir en contact avec l'un des bras oscillants inférieurs (14, 16), caractérisé en ce que,
- les deux butées (100, 102) peuvent être reliées l'une à l'autre avec des moyens de liaison pour constituer une unité de guidage solide et mobile en totalité,
- en ce qu'il est prévu des moyens de retenue pour fixer l'unité de guidage sur l'extrémité arrière du véhicule agricole, un mouvement latéral de l'unité de guidage étant possible par rapport à ces moyens, et
- en ce qu'il est prévu au moins un organe d'actionnement, qui est disposé entre les moyens de retenue et l'unité ce guidage et qui sert au mouvement latéral de l'unité de guidage.

2. Dispositif de guidage selon la revendication 1, caractérisé en ce que l'unité de guidage présente un évidement (84) qui est conçu de telle manière qu'une barre d'attelage (26) du véhicule, orientée vers l'arrière, puisse passer dans l'évidement (84).

3. Dispositif de guidage selon la revendication 1 ou 2, caractérisé en ce que les moyens de retenue comportent un premier et un second supports en porte-à-faux (60, 62), pouvant être fermement fixés au véhicule agricole et disposés avec un écartement entre eux transversalement à l'orientation du véhicule, ainsi que deux bras pivotants (64, 66) la première extrémité de chacun d'eux étant reliée de manière articulée à l'un des supports en porte-à-faux (60, 62) tandis que leur seconde extremité est en prise de manière articulée avec l'unité de guidage, les axes d'articulation des premières extrémités des bras pivotants (64, 66) étant orientés dans le sens de la marche par rapport à l'orientation du véhicule.

4. Dispositif de guidage selon l'une des revendications 1 à 3, caractérisé en ce que l'unité de guidage présente un porte-butée gauche (46), un porte-butée droit (70), une plaque (80) dont les extrémités latérales sont reliées aux porte-butées (46, 70) et qui maintient ceux-ci à l'écartement voulu, et des moyens de fixation (110, 112, 114) par lesquels chaque porte-butée (46, 70) peut être relié à la butée (100, 102) associée avec un écartement réglable entre eux.

5. Dispositif de guidage selon l'une des revendications 1 à 4, caractérisé en ce que l'organe d'actionnement comprend un vérin hydraulique (42) à double effet avec au moins une tige de piston (44) en saillie, et en ce que le corps de cylindre d'une part et ladite au moins une tige de piston (44) d'autre part sont respectivement monté de manière articulée contre le véhicule agricole, et reliée à l'unité de guidage, et notamment à un porte-butée (46).

6. Dispositif de guidage selon la revendication 4 ou 5, caractérisé en ce que l'unité de guidage contient une barre transversale (90) réglable en longueur, dont les extrémités filetées peuvent être vissées dans des trous taraudés situés dans les porte-butées (46, 70) disposés face à face, et en ce qu'il est prévu au moins un moyen de guidage (94, 96), qui peut être fixé sur le véhicule agricole et qui présente une rainure (98), dans laquelle est guidée la barre transversale (90) de manière à glisser, les parois latérales de la rainure (98) empêchant un mouvement de la barre transversale (98) et de l'unité de guidage par rapport à l'orientation du véhicule dans le sens de la marche.

7. Dispositif de guidage selon l'une des revendications 4 à 6, caractérisé en ce que chaque butée (100, 102) est dimensionnée pour un contact glissant directement contre un bras oscillant inférieur (14, 16) associé et en ce que chaque porte-butée (46, 70) est relié de manière articulée à la seconde extrémité d'un bras pivotant (64, 66) associé.

8. Véhicule agricole avec un dispositif de guidage selon l'une des revendications 1 à 7, dont l'unité de guidage est disposée entre les bras oscillants inférieurs (14, 16) et directement contre l'extrémité arrière du véhicule.

9. Véhicule agricole avec un dispositif de guidage selon l'une des revendications 1 à 8, caractérisé en ce qu'il est fixé, sur la structure du véhicule, une attache de barre d'attelage (24) qui s'étend transversalement à l'orientation du véhicule et qui porte un support (20) transversalement déplaçable et blocable, avec lequel s'engage l'organe d'actionnement.

10. Véhicule agricole avec un dispositif de guidage selon l'une des revendications 3 à 9, caractérisé en ce que les supports en porte-à-faux(60, 62) soit fixés à un carter de prise de force (12), fixe sur l'extrémité arrière du véhicule, au-dessus et de part et d'autre de l'arbre de prise de force (18) qui fait saillie vers l'arrière à partir du carter de prise de force (12).
